**Europäisches Patentamt**

**European Patent Office**

**Office européen des brevets**

(19)

(11) Veröffentlichungsnummer: **0 145 833**
**B1**

(12) **EUROPÄISCHE PATENTSCHRIFT**

(45) Veröffentlichungstag der Patentschrift:
**01.06.88**

(51) Int. Cl.⁴: **C 02 F 1/46**

(21) Anmeldenummer: **84108158.1**

(22) Anmeldetag: **12.07.84**

(54) **Vorrichtung zur elektrochemischen Sauerstoffentfernung aus Wasser.**

(30) Priorität: **15.11.83  DE 3341242**

(43) Veröffentlichungstag der Anmeldung:
**26.06.85 Patentblatt 85/26**

(45) Bekanntmachung des Hinweises auf die Patenterteilung:
**01.06.88 Patentblatt 88/22**

(84) Benannte Vertragsstaaten:
**AT BE CH DE FR GB IT LI LU NL SE**

(56) Entgegenhaltungen:
**FR - A - 379 848**
**FR - A - 2 190 737**
**US - A - 3 562 137**
**US - A - 3 859 195**

(73) Patentinhaber: **Vereinigte Elektrizitätswerke Westfalen AG, Rheinlanddamm 24, D-4600 Dortmund 1 (DE)**

(72) Erfinder: **Rickert, Hans, Prof.-Dr.,**
**Wilhelm-Dresing-Strasse 37, D-4600 Dortmund 50 (DE)**
Erfinder: **Holzäpfel, Günther, Dr., Silberhecke 52,**
**D-4600 Dortmund (DE)**
Erfinder: **Bäumler, Heinz, Dipl.-Ing., Am Kraftwerk 32,**
**D-4600 Dortmund (DE)**

(74) Vertreter: **Patentanwälte Meinke und Dabringhaus**
**Dipl.-Ing. J. Meinke Dipl.-Ing. W. Dabringhaus,**
**Westenhellweg 67, D-4600 Dortmund 1 (DE)**

ACTORUM AG

EP 0 145 833 B1

## Beschreibung

Die Erfindung richtet sich auf eine Vorrichtung zur elektrochemischen Sauerstoffentfernung aus Wasser und wässrigen Lösungen mit einem einen Wasserzulauf und einen Wasserablauf aufweisenden Gehäuse und einer vom Wasser benetzten Anode sowie einer Einrichtung zur Entfernung des gasförmigen Sauerstoffes aus dem Gehäuse.

Eine Vorrichtung der Gattung ist aus der DE-A-3 203 877 der Anmelderin bekannt. Dort wird z.B. innerhalb einer wasserführenden Rohrleitung eine entsprechende Vorrichtung eingebaut, die in Schwerkraftsrichtung oberhalb eines vom Wasser durchströmten Raumes mit einem Gasdom ausgerüstet ist. Im mit Wasser gefüllten unteren Teil des Gasdomes befindet sich eine Anode, während im wasserdurchströmten Raum z.B. eine als Gitter oder Netz ausgebildete Kathode vorgesehen ist. Der Anodenraum und der Kathodenraum sind durch ein Diaphragma getrennt. Das im Anodenraum entstehende Gas wird im Gasdom gesammelt und über ein Entlüftungsventil aus dem System entfernt. Diese bekannte Lösung ist ausgesprochen zuverlässig, allerdings weist sie noch einen gewissen konstruktiven Mehrbedarf auf. Sie ist insbesondere für den Einsatz in Haushalten, z.B. bei Warmwasserheizungen, unhandlich.

Aus der US-A-3 859 195 ist bekannt, dass sich an der Anode Gas bilden kann, das anschliessend entweicht. Dort ist eine Membran vorgesehen, die im wesentlichen zur Trennung der Elektroden dient, wobei hier nicht ausgeschlossen ist, dass der sich bildende Sekundärsauerstoff wieder gelöst wird und dass es bei einer Wasserstoffentwicklung an der Kathode zur Bildung von Knallgas kommen kann. Damit ist dieser Vorrichtung eine Entfernung von Sauerstoff aus wässrigen Lösungen nicht möglich.

Aus der FR-A-379 848 ist ein Kristallisationsgerät für Trinkwasser bekannt, mit dessen technischer Lehre wiederum eine elektrochemische Sauerstoffentfernung aus dem Wasser nicht möglich ist. Auch hier würde der an der Kathode reduzierte Sauerstoff an der Anode wieder entwickelt und gelänge von dort wieder in den Elektrolyten, so dass die Sauerstoffkonzentration in diesem insgesamt erhalten bliebe, auch bei dieser Lösung kann es zu der gefährlichen Knallgasentwicklung kommen.

Aufgabe der Erfindung ist die Schaffung einer Lösung, mit der bei einer konstruktiv einfachen, kompakten Bauweise eine Behandlung von Wasser oder wässrigen Lösungen zur Sauerstoffentfernung derart möglich ist, dass es nicht zu Knallgasentwicklungen kommt, wobei gleichzeitig Leistungssteigerungen gegenüber der gattungsbildenden Konstruktion erreicht werden soll.

Diese Aufgabe wird bei einer Vorrichtung der eingangs bezeichneten Art dadurch gelöst, dass das Gehäuse, die Anode und die Kathode im wesentlichen konzentrisch zueinander und die Anode und die Kathode räumlich und von einem Diaphragma getrennt angeordnet sind, wobei der vom Diaphragma gebildete Anodenraum mit einem Entlüftungsrohr und der Kathodenraum mit einem Wasserzulaufrohr und einem Wasserabfluss versehen ist.

Vorteilhafte Ausgestaltungen der Erfindung sind in den Unteransprüchen angegeben.

So kann es insbesondere zweckmässig sein, das Diaphragma, wie beansprucht und wie an sich bekannt, als poröses Rohr aus Ton oder Kunststoff herzustellen, allerdings, und hierin liegt ein besonderes Merkmal der Erfindung, kann das Diaphragma selbst auch als Ionenaustauscher ausgebildet sein, d.h. aus einem Ionenaustauschermaterial bestehen.

Die Gestaltung in zylindrischer Ausbildung aller zueinander stehenden Elemente macht eine sehr kompakte topfähnliche Bauweise möglich.

Darüber hinaus ist es zweckmässig, die Kathode möglichst gross zu gestalten, wozu die Erfindung entsprechende Querschnittsformen vorsieht.

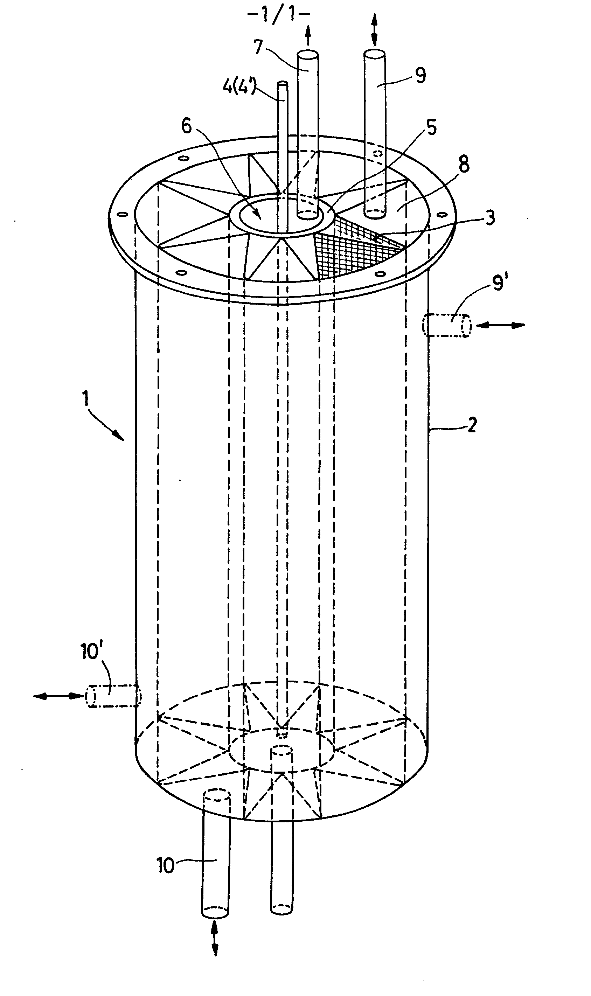

Die Erfindung ist nachstehend anhand der Zeichnung beispielsweise näher erläutert. Diese zeigt in der einzigen Figur eine vereinfacht wiedergegebene räumliche Darstellung einer Vorrichtung in Topfform.

Im dargestellten Beispiel weist die allgemein mit 1 bezeichnete Vorrichtung ein topfförmiges, zylindrisches Gehäuse 2 auf. Das Gehäuse 2 kann z.B. aus Kunststoff bestehen oder aus Metall. In diesem zyklindrischen Behälter 2 ist im dargestellten Beispiel ein im wesentlichen querschnittlich sternförmiges Drahtgitter als Kathode 3 angeordnet, die Gitterstruktur ist nur in einem Bereich wiedergegeben.

Zentrisch in der Mitte ist im dargestellten Beispiel eine Platin/Titananode 4 eingebaut, die konzentrisch von einem Diaphragma 5, z.B. einem porösen Tonrohr, umgeben ist. Der vom Diaphragma gebildete innere Anodenraum 6 ist mit einem Entlüftungsrohr 7 versehen, während der Kathodenraum 8 mit einem Wasserzulaufrohr 9 ausgerüstet ist. In Schwerkraftrichtung am unteren Ende ist der Kathodenraum 8 mit einem Wasserabflussrohr 10 ausgerüstet, wobei in der Figur Wasserzulauf wie auch Wasserablauf mit Doppelpfeilen bezeichnet sind, um deutlich zu machen, dass die Flussrichtung auch anders herum möglich ist.

In der Figur ist auch gestrichelt angedeutet, dass der Wasserzu- bzw. Wasserablauf 9 bzw. 10 auch an der Zylinderwand des Behälters 2 vorgesehen sein könne. Die entsprechenden Anschlussstutzen sind mit 9' bzw. 10' bezeichnet.

Ist die Anode 4 als Opferanode ausgebildet, so wird dies in der Figur dadurch kenntlich gemacht, dass die Anode zusätzlich das Bezugszeichen 4' aufweist. Bei einer solchen Ausgestaltung wird Schlamm erzeugt, der z.B. unten über die Leitung 10 aus der Vorrichtung 1 entnommen werden kann. Eine Entlüftungsleitung 7 ist dann entbehrlich.

Natürlich ist das beschriebene Ausführungsbeispiel der Erfindung noch in vielfacher Hinsicht abzuändern, ohne den Grundgedanken zu verlassen. So kann die Erfindung, abweichend von der dargestellten zylindrischen Form auch z.B. als halbkugelförmige Anordnung ausgebildet sein u.dgl. mehr.

## Patentansprüche

1. Vorrichtung zur elektrochemischen Sauerstoffentfernung aus Wasser und wässrigen Lösungen mit einem einen Wasserzulauf und einen Wasserablauf aufweisenden Gehäuse und einer vom Wasser benetzten Anode und Kathode sowie einer Einrichtung zur Entfernung des gasförmigen Sauerstoffes aus dem Gehäuse, dadurch gekennzeichnet, dass das Gehäuse (2), die Anode (4) und die Kathode (3) im wesentlichen konzentrisch zueinander und die Anode (4) und die Kathode (3) räumlich und von einem Diaphragma (5) getrennt angeordnet sind, wobei der vom Diaphragma (5) gebildete Anodenraum (6) mit einem Entlüftungsrohr (7) und der Kathodenraum (8) mit einem Wasserzulaufrohr (9) und einem Wasserabfluss (10) versehen ist.

2. Vorrichtung nach Anspruch 1, dadurch gekennzeichnet, dass das Diaphragma (5) als poröses Ton- und/oder Keramik- und/oder Kunststoffrohr oder aus einem Ionenaustauschermaterial gebildet bzw. ausgebildet ist.

3. Vorrichtung nach Anspruch 1 oder 2, dadurch gekennzeichnet, dass das Gehäuse (2), die Anode (4) die Kathode (3) und das Diaphragma im wesentlichen zylindrisch ausgebildet sind.

4. Vorrichtung nach einem der Ansprüche 1 bis 3, dadurch gekennzeichnet, dass die Kathode (3) querschnittlich stern- bzw. zick-zack- oder wellenförmig ausgebildet ist.

5. Vorrichtung nach einem der vorangehenden Ansprüche, dadurch gekennzeichnet, dass die zylindrische Gehäusewand (2) aus Kunststoff und/ oder Metall gebildet ist.

6. Vorrichtung nach einem der vorangehenden Ansprüche, dadurch gekennzeichnet, dass am Gehäuse in Schwerkraftsrichtung der Wasserablauf (10) unten und der Wasserzulauf (9) oben angeordnet sind.

7. Vorrichtung nach einem der vorangehenden Ansprüche, dadurch gekennzeichnet, dass Kathode (3) und Anode (4), wie an sich bekannt, über einen Potentiostaten steuerbar miteinander verbunden sind.

## Revendications

1. Dispositif pour l'élimination électrochimique de l'oxygène de l'eau et de solutions aqueuses comportant un boîtier présentant une arrivée d'eau et une évacuation d'eau et une anode et une cathode mouillées par l'eau, ainsi qu'un dispositif pour éliminer l'oxygène gazeux du boîtier, caractérisé en ce que le boîtier (2), l'anode (4) et la cathode (3) sont disposés d'une manière pratiquement concentrique les uns par rapport aux autres, et l'anode (4) et la cathode (3) sont séparées spatialement et par un diaphragme (5), l'espace anodique (6) formé par le diaphragme (5) étant muni d'un tube d'aération (7) et l'espace cathodique (8) d'un tube d'arrivée d'eau (9) et d'une évacuation d'eau (10).

2. Dispositif suivant les revendications 1 ou 2, caractérisé en ce que le diaphragme (5) est formé ou à la forme d'un tube poreux d'argile et/ou de céramique et/ou de matière plastique ou d'une matière échangeuse d'ions.

3. Dispositif suivant les revendications 1 ou 2, caractérisé en ce que le boîtier (2), l'anode (4), la cathode (3) et le diaphragme ont une forme essentiellement cylindrique.

4. Dispositif suivant l'une des revendications 1 à 3, caractérisé en ce que la cathode (3) présente en coupe une forme en étoile ou en zigzag ou ondulée.

5. Dispositif suivant l'une des revendications précédentes, caractérisé en ce que la paroi cylindrique du boîtier (2) est formée d'une matière plastique ou d'un métal.

6. Dispositif suivant l'une des revendications précédentes, caractérisé en ce que sur le boîtier, dans la direction de la gravité, l'évacuation d'eau (10) est disposée en-dessous et l'arrivée d'eau (9) au-dessus.

7. Dispositif suivant l'une des revendications précédentes, caractérisé en ce que la cathode (3) et l'anode (4), comme il est connu en soi, sont reliées l'une à l'autre d'une manière réglable par un potentiostat.

## Claims

1. Device for the electrochemical removal of oxygen water and aqueous solutions, with a housing having a water inlet and a water outlet, and an anode wetted by water, and cathode, and also an arrangement for the removal of the gaseous oxygen out of the housing, characterized in that the housing (2), the anode (4) and the cathode (3) are arranged essentially concentrically to each other and the anode (4) and the cathode (3) are arranged separated spatially and by a diaphragm (5), in which the anode chamber (6), which is formed by the diaphragm (5), is provided with an air discharge pipe (7) and the cathode chamber (8) is provided with a water inlet pipe (9) and a water discharge (10).

2. Device according to Claim 1, characterized in that the diaphragm (5) is formed or respectively constructed as a porous clay- and/or ceramic and/or plastic pipe or from an ion exchanger material.

3. Device according to Claim 1 or 2, characterized in that the housing (2), the anode (4), the cathode (3) and the diaphragm are constructed essentially cylindrically.

4. Device according to one of Claims 1 to 3, characterized in that the cathode (3) is constructed cross-sectionally in a star-, or respectively zig-zag- or corrugated shape.

5. Device according to one of the preceding Claims, characterized in that the cylindrical housing wall (2) is formed from plastic and/or metal.

6. Device according to one of the preceding Claims, characterized in that on the housing in gravitational direction the water outlet (10) is arranged at the bottom and the water inlet (9) is arranged at the top.

7. Device according to one of the preceding Claims, characterized in that the cathode (3) and anode (4), as known per se, are connected with each other so as to be controllable via a potentiostat.

-1 / 1-